# EUROPEAN PATENT APPLICATION

(11) **EP 0 657 706 A1**
(43) Date of publication of application: **14.06.1995**
(21) Application number: 94118254.5
(22) Date of filing: 19.11.1994
(51) Int. Cl.: F25C 1/04, F25C 1/22, H02H 9/02

(54) **Control system for an electrically operated valve**

(30) Priority: 07.12.1993 US 163251
(71) Applicant: EATON CORPORATION, Cleveland, Ohio 44114-2584 (US)
(72) Inventor: Swanson, Wesley Stuart, Elk Grove, Illinois 60007 (US); Pick, James Michael, Elk Grove, Illinois 60007 (US)
(74) Representative: Rüger, Rudolf, Dr.-Ing.

(57) **Abstract**

An icemaker (10) for a refrigerator has a timer controlled solenoid operated water fill valve (26) for water fill of the receptacle (12) in which ice is to be formed. In the event of malfunction of the solenoid timer control during water fill, overheat of the solenoid (28) and flooding are prevented by a PTC resistor (54) in series with the solenoid (28) to limit the current to cause solenoid (28) de-actuation before the coil overheats and before receptacle overflow. The PTC resistance (54) may also be electrically in series with a heater (38) employed for facilitating ice extraction.

## Description

### BACKGROUND OF THE INVENTION

The present invention relates to valves of the type employed in icemakers used in household refrigerators where chunks of ice are formed in a freezer compartment and harvested in batches in a continuously repeated cycle of operation. Icemakers of this type typically employ an electrically operated water fill valve which dispenses a controlled amount of water to fill a partitioned receptacle in which the water is frozen to form the ice chunks or particles of a desired size and shape. Typically, a mechanical device is operated in timed sequence to extract the ice chunks from the tray; and, it is commonly known to employ a heater for localized heating of the receptacle to facilitate the mechanical extraction of the ice chunks from the receptacle.

In the aforesaid type icemaker, the electrically operated water valve is typically of the solenoid actuated type; and, a timer control is provided in circuit with the solenoid to provide timed energization and de-energization of the water valve for filling the receptacle with the desired amount of water from a supply line connected to the refrigerator. In the event of a malfunction of the timer in a mode which would keep the fill valve solenoid energized beyond the normal fill time, the solenoid coil is subject to overheating and burnout leaving the icemaker permanently disabled. In addition, the fill valve can remain open for a sufficient period of time before burnout of the solenoid coil so as to result in overfill of the receptacle and flooding of the refrigerator. Thus it has been desired to provide a way or means of protecting an electrically operated valve and particularly a solenoid of the type employed in a refrigerator icemaker from damage resulting from malfunction of the timer for controlling the energization of the electrically operated water fill valve for the ice forming receptacle.

### SUMMARY OF THE INVENTION

The present invention provides overheating protection for a time controlled solenoid operated valve and particularly provides such protection in the event of failure of the timing control employed for energizing and de-energizing the valve when the valve is in the energized condition for a prolonged period of time in which overheating and burnout of the solenoid coil can occur. In normal operation, the valve is operated only for a period of time necessary to permit a desired amount of flow and a time period which is insufficient to permit overheating of the solenoid coil. However, upon failure of the timing control while the valve is energized, current flow in the coil for an extended period of time causes overheating. The present invention provides particular application in solenoid operated water fill valves employed in automatic icemakers employed in refrigerators. The present invention provides a positive temperature coefficient (PTC) resistive element electrically in series with the coil current. The PTC element is chosen such that current flow therethrough for a time period greater than the normal water fill cycle time for the ice forming receptacle results in increase in resistance of the PTC element sufficient to decrease the current to a level which de-energizes the solenoid and closes the water fill valve. In the preferred embodiment, the PTC is also series connected with an electrical heating device employed for facilitating extraction of the ice from the receptacle.

### BRIEF DESCRIPTION OF THE DRAWINGS

**FIG. 1** is an axonometric view of an icemaker employing the present invention;
**FIG. 2** is a top view of the device of FIG. 1 showing a wiring diagram for the fill valve and heater; and,
**FIG. 3** is an electrical schematic of the system of FIG. 2.

### DETAILED DESCRIPTION

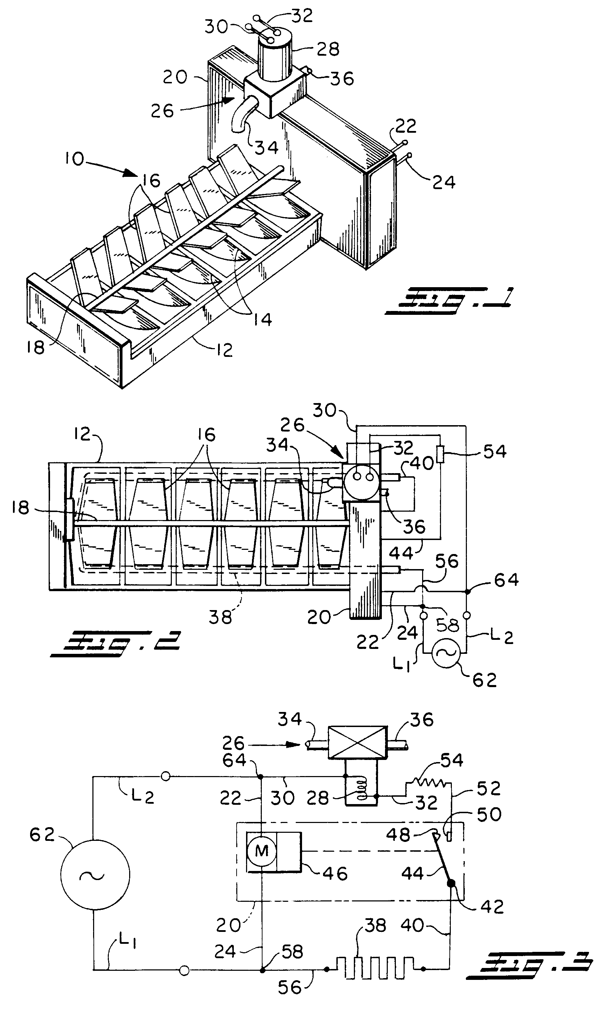

Referring to FIG. 1, the invention is shown as employed in an icemaker assembly indicated generally at 10 and having an iceforming receptacle 12 having a plurality of partitions 14 which form defined cavities which are filled with water for freezing into ice of a desired chunk size and shape. A plurality of paddles 16 are provided on a shaft 18 which is rotated by a motor driven mechanism, omitted in FIG. 1, but housed within the casing or control housing 20 and which is energized through electrical leads 22,24. Upon energization, the shaft 18 is rotated to cause paddles 16 to sweep ice from the compartments formed between partitions 14 of receptacle 12.

An electrically operated fill valve indicated generally at 26 is provided and preferably attached to the exterior of housing 20 and is operated by a solenoid 28 electrically energized through leads 30,32 for effecting opening of the valve 26 for discharge of water through outlet 34 to the receptacle. Valve 26 has an inlet denoted by reference numeral 36 adapted for connection to a water supply (not shown).

Referring to FIGS. 2 and 3, a heating element, preferably of the resistive type is disposed under the receptacle 12 and is shown in dashed outline in FIG. 2 and is denoted by reference numeral 38 and has one end thereof connected by lead 40 to the common terminal 42 of a switch 44. Switch 44 is connected mechanically to a timing mechanism 46 as indicated by the dashed line in FIGS. 2 and 3 located within the housing 20 and which is driven by a motor M. Switch 44 has a moveable contact 48 which is closed against a stationary contact 50 connected via lead 52 to a positive temperature coefficient (PTC) resistance device 54 which is connected to coil 28 via lead 32.

The side of receptacle heater 38 opposite switch 44 is connected via lead 56 to junction 58 which is connected to one side of the motor and to power line lead L1 from power source 62. The other side of the motor is connected via lead 22 to junction 64 which is connected to solenoid lead 30 and to the opposite side L2 of the power line.

In the presently preferred practice the invention, the PTC device 54 is chosen to prevent the coil wire from reaching the allowable temperature of 175° C and has a resistance change current of 255 milliamps a.c. at 240 volts r.m.s. at which point a rapid increase in resistance occurs. One PTC device found satisfactory has a coefficient of 1196 ohms per degree Centigrade in the temperature range 150° to 175° Centigrade. In the presently preferred practice of the invention, a ceramic PTC device available from Phillips Components Discrete Products Division located at 2001 West Blue Heron Boulevard, P.O. Box 10330, Riviera Beach, Florida 33404 and bearing manufacturer's designation type 1713 has been found particularly suitable for typical solenoids employed in valves found in refrigerator icemakers. It will be understood that the PTC device is illustrated as located separately from the valve 26; however, if desired the PTC device may be incorporated with the valve.

The present invention provides for limiting current to the coil in a solenoid operated valve particularly those of the type employed for use in a refrigerator icemaker to prevent the solenoid coil from overheating in the event of malfunction of the solenoid timing control mechanism while the solenoid is energized.

Although the invention has been hereinabove described with respect to the illustrated embodiments, it will be understood that the invention is capable of modification and variation and is limited only by the scope of the following claims.

## Claims

1. A control system for an automatic icemaker for use in a refrigerator comprising:
(a) receptacle means disposed in the refrigerator for receiving water to be frozen therein;
(b) heater means operable to heat portions of said receptacle means for facilitating removal of ice therefrom;
(c) electrically operated valve means operable upon connection to a source of water and upon electrical energization to control flow of water from the source to said receptacle means;
(d) a positive-temperature-coefficient (PTC) electrical resistor means;
(e) means operative to energize said valve means and said heater means in timed relationship; and,
(f) circuit means series connecting said heater means, said valve means and said PTC resistor means wherein for a given voltage of said source, said PTC resistor means is operative to limit current to a non-energizing level for said valve means within a predetermined time interval after energization.

2. The control system defined in claim 1, wherein said valve means includes an electromagnetic operator.

3. The control system defined in claim 1, wherein said valve means includes a solenoid coil subject to heating above an allowable limit upon energization of said valve means for a time interval greater than said predetermined interval.

4. The control system defined in claim 1 wherein said PTC resistor means has a PTC coefficient of 1196 ohms per degree Centigrade (Ω/°C) in the temperature range 150°-175°C.

5. The control system defined in claim 1 wherein said PTC resistor means has a substantially constant resistance for current flow therethrough less than 190 milliamps.

6. A control system for an automatic icemaker for use in a refrigerated compartment comprising:
(a) receptacle means disposed in said compartment for receiving water to be frozen therein;
(b) electrically operated valve means operable upon connection to a source of water and upon energization and de-energization from a source of electrical power to control flow of water from the source to said receptacle means for formation of ice therein;
(c) heater means operable to heat portions of said receptacle means for facilitating removal of ice formed therein;
(d) timing means operably connected to said valve means and said heater means and operable for controlling energization and de-energization of said heater means and valve means in a desired timed relationship for effecting ice formation and harvesting of the ice from the receptacle;
(e) current limiting means operable upon energization of said valve means for a predetermined time interval to effect de-energization of said valve means independently from said timing means, wherein said time interval is greater than the time required to energize said valve for filling said receptacle means.

7. The control system defined in claim 6, wherein said current limiting means comprises a positive temperature coefficient (PTC) resistor having a resistance charge current of 255 milliamps.

8. The control system defined in claim 6, wherein said valve means is actuated by a solenoid and said current limiting means comprises a PTC resistance means series connected with said solenoid.

9. A system for timed control of an electrically operated valve comprising:
(a) electrically operated valve means including a solenoid operable upon energization at a certain current level for an allowable time to effect opening and closing of a valve member, said solenoid subject to overheating upon energization at said current level for longer than said allowable time;
(b) timing circuit means operably connected to control said energization of said valve means for said allowable time;
(c) resistance means having positive temperature coefficient (PTC) properties with respect to current flow therethrough versus temperature, said PTC resistance electrically series connected with said solenoid, said PTC resistance means operable after elapse of said allowable time to limit current flow through said solenoid coil to less than said certain level to de-energize said solenoid in the event of malfunction of said timing means.

10. The system defined in claim 9, wherein said certain level current is 255 milliamps a.c. at 240 volts r.m.s.
